# FASCICULE DE BREVET EUROPEEN

(11) **EP 2 326 221 B1**
(45) Date de publication et mention de la délivrance du brevet: **23.09.2015**
(21) Numéro de dépôt: 09752414.4
(22) Date de dépôt: 25.09.2009
(51) Int. Cl.: A47J 27/00

(54) **RECIPIENT POUR LA CUISSON D'ALIMENTS**
BEHÄLTER ZUM GAREN VON NAHRUNGSMITTELN
CONTAINER FOR COOKING FOOD

(30) Priorité: 25.09.2008 FR 0856451
(43) Date de publication de la demande: 01.06.2011
(73) Titulaire: SEB SA, 69130 Ecully (FR)
(72) Inventeur: CHAPPEL, Valérie, F-74150 Rumilly (FR); GOUTHIERE, Christophe, F-74150 Rumilly (FR)
(74) Mandataire: Novagraaf Technologies
(86) Numéro de dépôt international: PCT/FR2009/051823
(87) Numéro de publication internationale: WO 2010/034951

(56) Documents cités:
- EP-A- 0 247 932
- EP-A- 1 632 159
- GB-A- 2 076 708

## Description

La présente invention concerne un récipient pour la cuisson d'aliments, notamment le récipient d'une casserole, sauteuse, poêle, caquelon pour fondue...

On connaît un récipient pour la cuisson d'aliments, récipient du type comportant une paroi de fond et une paroi latérale se dressant depuis la paroi de fond, la paroi latérale comprenant, à sa surface extérieure, une ligne décorative s'étendant longitudinalement sur toute l'amplitude angulaire de la paroi latérale.

De façon connu, les lignes décoratives sont sérigraphiées. Cependant, notamment quand la paroi latérale présente une allure bombée, la sérigraphie ne peut se faire sur la paroi latérale. Une première solution a été de réaliser la sérigraphie avant la mise en forme du récipient, c'est-à-dire sur le disque mère, avant emboutissage. Cependant, du fait de la nature du matériau utilisé (en général, de l'acier inoxydable), lors de l'emboutissage, l'étirage du matériau n'est pas uniforme et la ligne décorative présente des irrégularités disgracieuses.

Un récipient similaire est décrit dans EP 0 247 932 A2.

La présente invention vise à réaliser un récipient pour la cuisson d'aliments dont la ligne décorative ne présente pas d'irrégularités disgracieuses.

Selon l'invention comme définie dans les revendications, la ligne décorative du récipient du type précité présente une ondulation verticale dont l'amplitude est au moins égale à dix fois son épaisseur.

Ainsi, les irrégularités sont noyées dans l'aspect esthétique général de la ligne décorative ondulée. Il est donc ainsi possible de réaliser un récipient pour cuisson avec une paroi latérale décorée par une ligne ondulée en déposant par sérigraphie sur le disque mère, avant emboutissage, une ligne mère ayant une ondulation première qui se transformera en la ligne sérigraphiée sur la paroi latérale du récipient et présentant alors une ondulation verticale dont l'amplitude est au moins égale à dix fois son épaisseur.

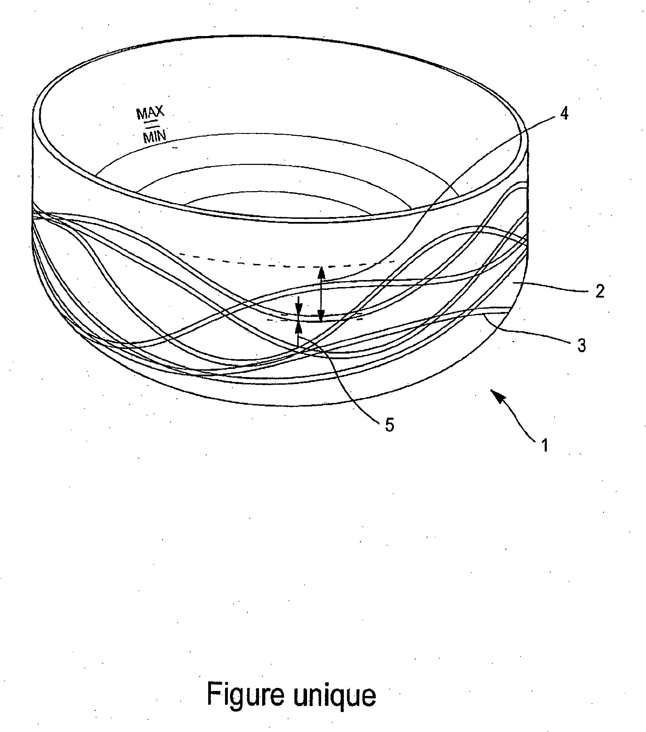

D'autres particularités et avantages de la présente invention apparaîtront dans la description d'un mode de réalisation donné à titre d'exemple non limitatif et illustré par l'unique figure mise en annexe représentant un récipient de cuisson conforme à la présente invention.

Un récipient 1 pour la cuisson d'aliments (en l'occurrence, un caquelon pour un appareil à fondue) comprend une paroi de fond (sensiblement horizontale) et une paroi latérale 2 (sensiblement verticale) qui se dresse depuis la paroi de fond.

La paroi latérale 2 comporte une surface extérieure sur laquelle figure au moins une ligne décorative 3 (ici, six lignes décoratives). Chaque ligne décorative 3 s'étend longitudinalement sur toute l'amplitude angulaire de la paroi latérale et elle est sans fin. Cette absence de raccord est due au procédé de fabrication du récipient 1. En effet, le récipient 1 dont la paroi latérale 2 porte au moins une ligne décorative 3 est le résultat de l'emboutissage d'un disque mère sur lequel a été préalablement sérigraphiée une ligne mère.

Afin de noyer les irrégularités verticales de chaque ligne décorative 3 du fait de l'irrégularité de l'étirage du matériau constituant le disque mère, chaque ligne mère présente une ondulation première qui se transformera en ligne décorative 3 présentant une ondulation verticale dont l'amplitude 4 est au moins égale à dix fois son épaisseur 5. Chaque ligne décorative 3 forme une bande qui, dans le présent exemple, est d'épaisseur constante.

Dans le présent mode de réalisation, le récipient comprend au moins une paire de lignes décoratives 3 (ici, trois paires) se croisant en au moins deux points (ici, en deux points).

Dans le présent exemple, les deux lignes décoratives d'une même paire sont de même couleur, et les paires de lignes ont chacune une couleur propre (ici, vert, bleu et rouge). Chacune des lignes décoratives est formée par un trait continu qui, de plus, est d'épaisseur constante sur toute sa longueur.

Ainsi, l'objet de la présente invention est un article culinaire revêtu par sérigraphie, avec des lignes ondulées, c'est-à-dire des lignes présentant une alternance plus ou moins régulière de sommets et de creux.

La présente invention n'est pas limitée au présent mode de réalisation.

Il serait possible que chaque ligne (ou certaines d'entre elles) ait une épaisseur qui lui soit propre, et/ou présente une ondulation avec une fréquence et/ou une amplitude qui lui soit également propre. Ainsi, les deux lignes décoratives d'une même paire pourraient être d'épaisseur égale.

Selon l'invention, le revêtement ainsi que les lignes décoratives sont réalisés selon un procédé d'enduction à plat comme la sérigraphie ou la sublimation.

## Revendications

1. Récipient (1) pour la cuisson d'aliments, le récipient (1) comportant une paroi de fond et une paroi latérale (2) se dressant depuis la paroi de fond et présentant, à sa surface extérieure, au moins une ligne décorative (3) s'étendant longitudinalement sur toute l'amplitude angulaire de la paroi latérale (2), **caractérisé en ce que** la ligne décorative (3) est une ligne ondulée de revêtement de décors réalisé selon un procédé d'enduction à plat présentant une alternance de sommets et de creux et dont l'amplitude (4) de son ondulation verticale est au moins égale à dix fois son épaisseur (5).

2. Récipient (1) selon la revendication 1, **caractérisé en ce qu'**il comprend une paire de lignes décoratives (3) ayant une ondulation verticale dont l'amplitude est au moins égale à dix fois son épaisseur, les deux lignes (3) se croisant en au moins deux points.

3. Récipient (1) selon la revendication 2, **caractérisé en ce qu'**il comprend plusieurs paires de lignes décoratives (3) se croisant en au moins deux points.

4. Récipient (1) selon la revendication 2 ou 3, **caractérisé en ce que** les deux lignes décoratives (3) d'une même paire sont de même couleur.

5. Récipient (1) selon l'une des revendications 2 à 4, **caractérisé en ce que** les paires de lignes ont chacune une couleur propre.

6. Récipient (1) selon l'une des revendications 1 à 5, **caractérisé en ce que** chaque ligne décorative (3) est formée par un trait continu.

7. Récipient selon l'une des revendications 1 à 5, **caractérisé en ce que** chaque ligne décorative est formée par la succession d'un même motif.

8. Procédé de réalisation d'un récipient selon la revendication 1 comprenant une étape de dépôt, sur un disque mère, d'un revêtement.et d'au moins une ligne décorative ondulée, et une étape d'emboutissage permettant la réalisation du récipient dont la surface extérieure de la paroi latérale est revêtue et présente au moins une ligne décorative, **caractérisé en ce que** le dépôt du revêtement et de chaque ligne décorative ondulée est réalisé par un procédé d'enduction à plat.

9. Procédé de réalisation d'un récipient selon la revendication 8, **caractérisé en ce que** le dépôt du revêtement et de chaque ligne décorative ondulée est réalisé par sérigraphie.

10. Procédé de réalisation d'un récipient selon la revendication 8 ou 9, **caractérisé en ce que** l'étape de dépôt comprend la réalisation d'une ligne ondulée présentant une alternance de sommets et de creux et dont l'amplitude (4) de son ondulation verticale est au moins égale à dix fois son épaisseur (5).

## Patentansprüche

1. Behälter (1) zum Garen von Nahrungsmitteln, wobei der Behälter (1) eine Bodenwandung und eine Seitenwandung (2) umfasst, die von der Bodenwandung emporragt und auf ihrer Außenseite mindestens eine Dekorlinie (3) aufweist, die sich längs auf der gesamten Winkelamplitude der Seitenwandung (2) erstreckt, **dadurch gekennzeichnet, dass** die Dekorlinie (3) eine wellige Oberflächendekorlinie ist, die nach einem Flachbeschichtungsverfahren hergestellt ist und eine Wechselfolge von Erhebungen und Vertiefungen aufweist, und deren Amplitude (4) ihrer vertikalen Wellung mindestens gleich zehnmal ihre Dicke (5) ist.

2. Behälter (1) nach Anspruch 1, **dadurch gekennzeichnet, dass** er ein Paar von Dekorlinien (3) umfasst, die eine vertikale Wellung haben, deren Amplitude mindestens gleich zehnmal ihre Dicke ist, wobei sich die beiden Linien (3) an mindestens zwei Punkten kreuzen.

3. Behälter (1) nach Anspruch 2, **dadurch gekennzeichnet, dass** er mehrere Paare von Dekorlinien (3) umfasst, die sich an mindestens zwei Punkten kreuzen.

4. Behälter (1) nach Anspruch 2 oder 3, **dadurch gekennzeichnet, dass** die beiden Dekorlinien (3) eines selben Paars dieselbe Farbe haben.

5. Behälter (1) nach einem der Ansprüche 2 bis 4, **dadurch gekennzeichnet, dass** die Linienpaare jeweils eine eigene Farbe haben.

6. Behälter (1) nach einem der Ansprüche 1 bis 5, **dadurch gekennzeichnet, dass** jede Dekorlinie (3) von einem durchgehenden Linienzug gebildet ist.

7. Behälter nach einem der Ansprüche 1 bis 5, **dadurch gekennzeichnet, dass** jede Dekorlinie von der Aufeinanderfolge eines selben Motivs gebildet ist.

8. Verfahren zur Herstellung eines Behälters nach Anspruch 1, umfassend einen Schritt des Aufbringens einer Beschichtung und mindestens einer welligen Dekorlinie auf eine Mutterplatte, und einen Schritt des Tiefziehens, der die Herstellung des Behälters ermöglicht, dessen Außenseite der Seitenwandung beschichtet ist und mindestens eine Dekorlinie aufweist, **dadurch gekennzeichnet, dass** das Aufbringen der Beschichtung und jeder welligen Dekorlinie durch ein Flachbeschichtungsverfahren erfolgt.

9. Verfahren zur Herstellung eines Behälters nach Anspruch 8, **dadurch gekennzeichnet, dass** das Aufbringen der Beschichtung und jeder welligen Dekorlinie durch Serigraphie erfolgt.

10. Verfahren zur Herstellung eines Behälters nach Anspruch 8 oder 9, **dadurch gekennzeichnet, dass** der Schritt des Aufbringens die Herstellung einer welligen Linie umfasst, die eine Wechselfolge von Erhebungen und Vertiefungen aufweist, und deren Amplitude (4) ihrer vertikalen Wellung mindestens gleich zehnmal ihre Dicke (5) ist.

## Claims

1. Container (1) for cooking food, the container (1) comprising a bottom wall and a sidewall (2) rising up from the bottom wall and having, on its outer surface, at least one decorative line (3) extending longitudinally over the entire angular amplitude of the sidewall (2), **characterized in that** the decorative line (3) is a wavy decorative coating line created by means of a flat coating method and having a sequence of peaks and hollows, and wherein the amplitude (4) of its vertical crimping is at least equal to ten times its thickness (5).

2. Container (1) according to Claim 1, **characterized in that** it comprises a pair of decorative lines (3) having a vertical crimping whose amplitude is at least equal to ten times its thickness, the two lines (3) crossing at at least two points.

3. Container (1) according to Claim 2, **characterized in that** it comprises multiple pairs of decorative lines (3) crossing at at least two points.

4. Container (1) according to Claim 2 or 3, **characterized in that** the two decorative lines (3) of one and the same pair are of the same colour.

5. Container (1) according to one of Claims 2 to 4, **characterized in that** the pairs of lines each have their own colour.

6. Container (1) according to one of Claims 1 to 5, **characterized in that** each decorative line (3) is formed as a solid line.

7. Container according to one of Claims 1 to 5, **characterized in that** each decorative line is formed by the repetition of one and the same pattern.

8. Method for making a container according to Claim 1, comprising a step of depositing, onto a blank, a coating and at least one wavy decorative line, and a stamping step by means of which it is possible to create the container, of which the outer surface of the sidewall is coated and has at least one decorative line, **characterized in that** the coating and each wavy decorative line are deposited by means of a flat coating method.

9. Method for making a container according to Claim 8, **characterized in that** the coating and each wavy decorative line are deposited by screen printing.

10. Method for making a container according to Claim 8 or 9, **characterized in that** the depositing step comprises creating a wavy line having a sequence of peaks and hollows wherein the amplitude (4) of its vertical crimping is at least equal to ten times its thickness (5).
